# EUROPÄISCHE PATENTSCHRIFT

(11) **EP 1 518 454 B1**
(45) Veröffentlichungstag und Bekanntmachung des Hinweises auf die Patenterteilung: **02.01.2008**
(21) Anmeldenummer: 04020976.9
(22) Anmeldetag: 03.09.2004
(51) Int. Cl.: A01F 15/04, B30B 15/00

(54) **Schwerlastkupplung**
Heavy duty coupling
Accouplement pour charges lourdes

(30) Priorität: 27.09.2003 DE 10344930
(43) Veröffentlichungstag der Anmeldung: 30.03.2005
(73) Patentinhaber: Paal GmbH, 49124 Georgsmarienhütte (DE)
(72) Erfinder: Telscher, Thomas, 49078 Osnabrück (DE)
(74) Vertreter: Bünemann, Egon

(56) Entgegenhaltungen:
- EP-A- 1 332 866
- US-A- 2 639 619
- US-A- 3 948 077

## Beschreibung

Die Erfindung betrifft eine Schwerlastkupplung nach dem Oberbegriff des Anspruchs 1, wie sie beispielsweise als Verbindung zwischen der Kolbenstange eines hydraulischen Antriebs bei Großpressen, etwa Ballenpressen, und einem vorgelagerten Preßstempel benötigt werden. Die größten Belastungen für den Preßstempel und damit auch für die Schwerlastkupplung zur Kolbenstange hin treten zwar bei der Vorschubbewegung der Presse auf und sind als elementare Druckbelastungen konstruktiv einfach zu berücksichtigen, jedoch ist die vergleichsweise einfache Druckbelastung oft durch stoßweise und exzentrische Beanspruchungen überlagert, die auch bei Vorhandensein von Bewegungsführungen für den Preßstempel auf die Schwerlastkupplung zurückwirken. In jedem Fall aber sind bei der Rückbewegung des Preßstempels wechselnde Belastungen zu berücksichtigen, die von der Kupplung aufzufangen sind.

Gerade letztere haben bei herkömmlichen, über Verschraubungen lösbar gestalteten Kupplungen dazu geführt, daß sich die Verbindungen lockerten und dann im gelockerten Zustand zusätzliche kupplungsinterne Beanspruchungen erzeugten oder an Schrauben mit ordnungsgemäßem Sitz weitergaben. Bei Reparaturen an der Schwerlastkupplung, aber auch bei einem Lösen der Kupplung zu Wartungszwecken oder zur Reparatur des Preßstempels, hat sich überdies das Lösen der Verschraubungen als schwierig und umständlich herausgestellt.

Aufgabe der Erfindung ist es dementsprechend, eine Schwerlastkupplung der vorstehend betrachteten Art so zu gestalten, daß diese besser gegen eine Lockerung der herzustellenden Verbindung bei laufendem Schwerlastbetrieb geschützt ist und hei robuster Bauweise möglichst einfach zu schließen und zu öffnen ist.

Gemäß der Erfindung wird diese Aufgabe von einer Schwerlastkupplung nach dem Oberbegriff des Anspruchs 1 ausgehend mit den kennzeichnenden Merkmalen des Anspruchs 1 gelöst.

Es hat sich gezeigt, daß mit Keilen eine sehr viel einfachere, robustere und auch leicht zu lösende Verbindung erreicht werden kann. Das Einsetzen eines Keils quer zur Längsrichtung des Kolbenstangenfußes schafft eine spielfreie Kupplungsverbindung, die in einer elementaren Gegenbewegung auch wieder zu lösen ist. Eine solche Bewegung ist - anders als Schraubbewegungen - auch in einer oft beengten baulichen Situation im Anschlußbereich eines Preßstempels und ohne besondere Werkzeuge ausführbar.

Eine Keilverbindung zwischen einer Kolbenstange und einem Preßstempel bei Pressen ist an sich bekannt (US-A-2,639,619). Dort dient der Keil allerdings nicht dazu, eine Kupplung leicht lösbar zu gestalten, sondern als Mittel zur Abstandsjustierung zwischen einer antriebsseitigen Exenterwelle und einem Pressenkopf bzw. Preßwerkzeug. Auch nach der EP-A-1 332 866 ist ein Keilelement zwischen Preßkopf und Preßantrieb eingeschaltet, das - über einen Schrittmotor - eine fortlaufende Längen- bzw. Höhenverstellung vorsieht. Auch hier dient der Keil nicht als leicht lösbares Kupplungselement.

Um den Kupplungssitz solcher Keile zu sichern und möglichst auch bei laufendem Betrieb und langzeitigen Belastungen und Abnutzungen selbstsichernd bzw. selbstnachstellend zu gestalten, können entsprechende Keile mit einer Vorspannung oder Vorlast in Richtung auf den festen Kupplungssitz hin ausgeführt werden. Im einfachsten Fall ist dies bei vorwiegend horizontal verlaufender Kolbenstange unter Ausnutzung der Schwerkraft der Keile selbst mit einer Einführ- und Zustellrichtung von oben zu erreichen. Der Keil mit einer vorwiegend nach unten gerichteten Stellung bewegt sich also schon durch sein Eigengewicht in eine neue feste Keillage, wenn sich etwa durch Verformungen oder Abnutzungen ein Spiel ergibt.

Während bei einer Vorbewegung des Preßstempels die Druckübertragung der Arbeitskräfte von der Kolbenstange auf den Kolbenstangenfuß und dann auf den Preßstempel einer möglichst direkten und einfachen Anlage bzw. Aufnahme zur Druckübertragung überlassen bleiben kann, bedarf es zumindest der Übertragung der Kräfte für die Rückzugsbewegung einer Verankerung an der Kolbenstange. Um deren Querschnitt so wenig wie möglich in Anspruch zu nehmen, ,können vorteilhafte umfangsseitige Druckstücke vorgesehen werden, die sich einerseits gegen Hinterschneidungen oder Schultern am Kopf der Kolbenstange abstützen und andererseits gegen mehrere, vorzugsweise zwei beidseitig der Kolbenstange angeordnete, Keile anliegen. Damit lassen sich einerseits ausreichend große Keilandrucksflächen ohne bedenkliche Schwächung des Kolbenstangenquerschnitts erreichen, andererseits ergeben sich Möglichkeiten in der Bauform der Druckstücke, die ohne besondere Verbindungselemente einsetzbar und auch wieder leicht lösbar sind, was die Handhabungen bei Wartung und Reparaturen sehr erleichtert.

Ein Ausführungsbeispiel der Erfindung ist in der Zeichnung dargestellt und wird nachfolgend näher beschrieben. In der Zeichnung zeigen:
- Fig. 1: Ein Längsschnitt durch einen Preßkolben mit Kolbenstangenfuß und einem anschließenden Teil einer Kolbenstange

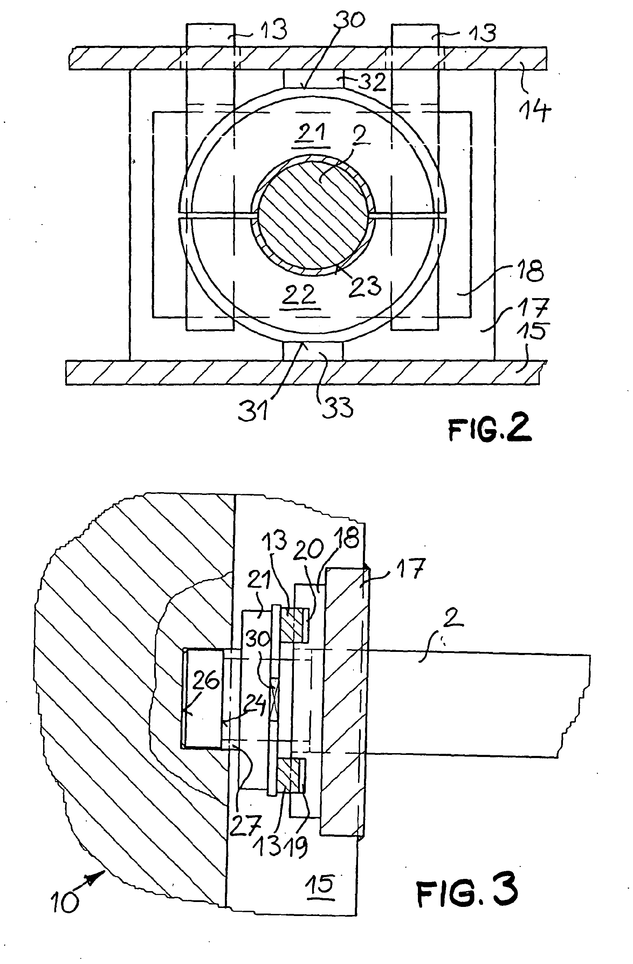

- Fig. 2: Schnitt nach Linie II-II in Fig. 1 und
- Fig. 3: Schnitt nach Linie III-III in Fig. 1.

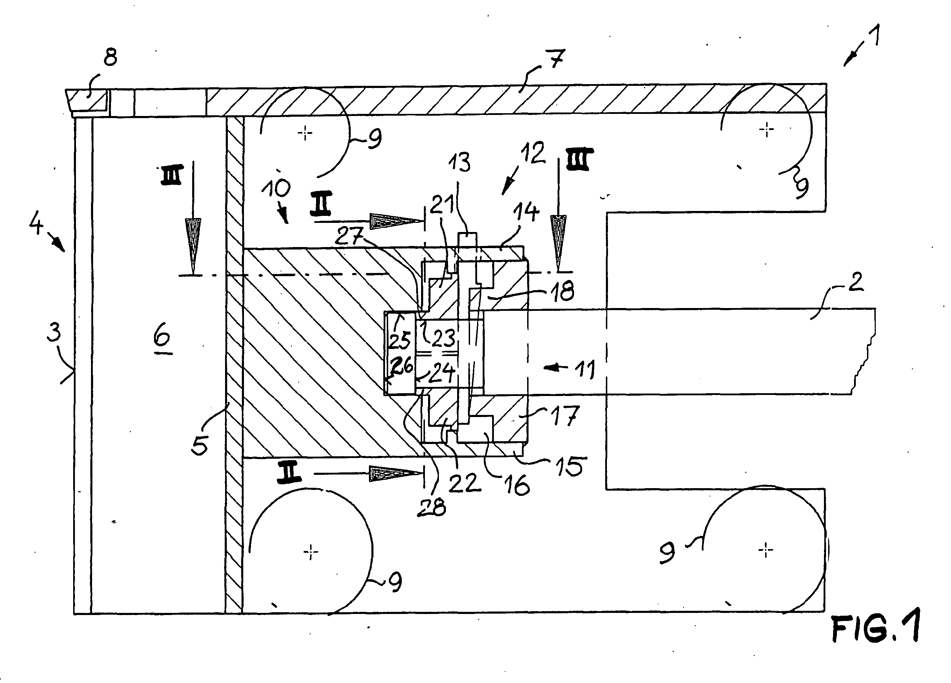

In Fig. 1 ist ein Preßstempel 1 einer Kanalballenpresse dargestellt, der in bekannter Weise dafür ausgelegt ist, aus einer Rückzugsposition hinter einem Einfüllschacht von einem hydraulischen Preßantrieb mit einer Kolbenstange 2 vorbewegt zu werden und Preßgut mit hohen Preßkräften in einem Preßkanal zu verdichten. Der Preßstempel 1 weist dazu eine Preßfläche 3 an der Vorderseite einer zusammengesetzten Stirnwandstruktur auf, die aus nebeneinanderliegenden und voneinander durch Drahtaustrittsschlitze distanzierten Frontplatten 4 und einer den ganzen Querschnitt des Preßstempels 1 ausfüllenden Rückplatte 5 sowie mehreren in senkrechter Richtung und in Preßrichtung stehenden Zwischenwänden 6 gebildet ist. Diese zergliederte Struktur des Preßstempels hinter der Preßfläche 3 dient in herkömmlicher Weise dazu, Kanäle und Austrittsschlitze für das Durchführen und Anlegen von Bindegut an einen fertig gepreßten Ballen zu schaffen. An der Oberseite ist der Preßstempel 1 mit einer Abdeckplatte 7 versehen, so daß im vorgefahrenen Zustand des Preßstempels kein Preßgut hinter diesen gelangt. Ebenso ist der Preßstempel nach dem Ausführungsbeispiel vorderseitig mit einem Schermesser 8 versehen, welches beim Eintritt des Preßstempels in den Preßkanal das überstehende Preßgut abtrennt. Zur sauberen Führung des Preßstempels 1 und zum Abfangen von Querkräften und Kippmomenten sind auf jeder Seite des Preßstempels 1vier Rollen 9 vorgesehen, die an ortsfesten Schienen in der Presse laufen.

Die Verbindung zwischen dem Preßstempel 1 und der Kobenstange 2 stellt einen Problembereich dar, da große und auch stoßbehaftete Kräfte übertragen werden müssen und da andererseits bei Reparaturen oder Wartungen am Preßstempel oder am hydraulischen Antrieb eine Trennung von Kolbenstange 2 und Preßstempel 1 vorzunehmen ist, die in beengter Situation innerhalb des Preßstempels und bei umständlicher Handhabung herkömmlicher Verschraubungen etwa bei einem Kranz von Flanschverschraubungen, schwierig und zeitaufwendig sein kann.

Im vorliegenden Fall ist ein Kolbenstangefuß 10 zur preßstempelseitigen Aufnahme eines Kopfs 11 der Kolbenstange 2 mit einer Kupplung 12 ausgestattet, in der zwei jeweils zu einer Seite der Kolbenstange nach unten einzubringende und sich nach unten verjüngende Keile 13 für eine spielfreie und sich bei Abnutzungen selbst nachstellende Verbindung sorgen.

Der Kolbenstangefuß 10 setzt sich im Bereich der Kupplung 12 in der Grundform eines den Kolbenstangenkopf 11 oben, unten und rückseitig umschließenden, seitlich offenen Gehäuses fort. Dabei stehen ein oberer Träger 14 und ein unterer Träger 15 über einen freien Zwischenraum 16 hinaus und halten zwischen sich ein endseitiges Joch 17, das mit den Trägern 14,15 fest verschweißt ist.

Das Joch 17 ist zum freien Zwischenraum 16 hin in einem engeren, die Kolbenstange 2 umgebenden Bereich mit einer Nase 18 versehen, in die vorderseitig Nuten 19,20 mit einer an die Breite und die Keilform der Keile 13,14 angepaßten Eintiefung eingearbeitet, die eine flächige Anlage der Keile und deren seitliche Führung gewährleisten.

Auf der anderen Seite liegen die Keile 13 an zwei im wesentlichen halbringförmige Druckstücke 21,22 an, die sich zu einer Ringform ergänzen.

In der in der Zeichnung dargestellten Arbeitsstellung der Kupplung 12 umschließen die Druckstücke 21,22 die Kolbenstange 2 in einer breiten Ringnut 23, die vorderseitig mit einer Ringschulter 24 abschließt, welche als Andruckfläche für die Druckstücke 21,22 dient Bei der Rückzugsbewegung des Preßkolbens 1 werden also die Druckstücke 21,22 vom Kopf 11 der Kolbenstange mit Hilfe der Ringschulter 24 mitgenommen und drücken über die beiden Keile 13 gegen das Joch 17, welches fest mit dem Kolbenstangenfuß 10 und dem Preßstempel verbunden ist.

Zum Vorschub des Preßstempels 1 ist eine direkte Druckübertragung vorgesehen, auch wenn die Keile 13 in einer abgewandelten Ausführung mit vorderseitiger Anlage am oberen Träger 14 grundsätzlich in beiden Richtungen Lasten überragen könnten. Hier liegen die Keile 13 jedoch nicht am Träger 14 an. Der Kopf der Preßkolbenstange greift spielarm in eine passende, axial fluchtende Aufnahme 25 im Kolbenstangenfuß 10 und drückt mit seiner Stirnseite 26 in den Kolbenstangenfuß 10 hinein. Die direkte Kraftübertragung berücksichtigt die höheren Kräfte und Belastungen beim Preßstempel-Vorschub.

Die Keile 13 sind vertikal eingesetzt und verjüngen sich nach unten hin. Lockerungsbewegungen im laufenden, rauhen Betrieb und Verformungen an den Anlageflächen zwischen den Keilen und den benachbarten Teilen, die unter Last und Dauerbeanspruchung auftreten können, und dergleichen Abnutzungserscheinungen, die bei Verschraubungen und sonstigen Kupplungsverbindungen zu lose und damit höherer Beanspruchung führen, beheben sich bei den Keilen 13 selbsttätig, indem diese nach unten hin in einen spielfreien Sitz nachrutschen.

Andererseits kann die Kupplung mit einfachen Mitteln und auf eine schnelle Weise dadurch gelöst werden, daß die Keile 13 nach oben hin herausgezogen, herausgedrückt oder herausgeschlagen werden.

Die Druckstücke sind in der dargestellten Kupplungsstellung festgelegt. Vorderseitig weisen sie Fortsätze 27,28 auf, deren Umfangskontur in die Aufnahme 25 für den Kolbenstangenkopf 11 hineinpaßt und, da die Ringschulter 24 zumindest um ein geringes Maß in die Aufnahme 25 hineingelangt, umfangsseitig von der Aufnahme 25 festgelegt wird.

Gegen ein Verdrehen weisen die Druckstücke 21,22 eine Abflachung 30 bzw. 31 auf, mit der sie auf einem Formstück 32 bzw. 33 aufsitzen, das jeweils fest auf dem oberen bzw. unteren Träger 14,15 sitzt und das bei ausreichend enger Anpassung ein Verdrehen der Druckstücke um den Kolbenstangenkopf 11 ausschließt. Die einfache Form der Verdrehsicherung kann durch mancherlei andere Verankerungen ersetzt werden.

Die vollständig gesicherte Lage der Druckstücke 21,22 wird jedoch dann frei, wenn die Keile 13,14 entfernt sind. Die Druckstücke lassen sich dann axial auf der Kolbenstange 2 innerhalb der Ringnut 23 nach hinten verschieben und gelangen gegenüber der Aufnahme 25 und den Formstücken 32,33 außer Eingriff. Bei freier seitlicher Zugangsmöglichkeit lassen sich die Druckstücke 21,22 um etwa 90° verdrehen und seitlich herausnehmen. Die Kolbenstange 2 kann dann frei nach hinten herausgezogen werden.

Es versteht sich, daß die Kupplung in symmetrischer Form auch mit einem einzigen Keil realisiert werden könnte, und zwar sogar unter Verzicht auf die Druckstücke. Die paarweise beidseitige Anordnung der Keile und die Zwischenschaltung der Druckstücke erlaubt es jedoch, den Querschnitt der Kolbenstange 2 im Bereich des Kopfes 11 weitestgehend zu schonen und damit die Belastbarkeit der Kolbenstange insbesondere bei dem hochbelasteten Preßhub zu erhalten.

In der vorliegenden Ausführungsform ist ein Lösen der Kupplung und eine Demontage der Druckstücke mit wenigen Handgriffen möglich, ohne daß hierzu besondere Werkzeuge vorauszusetzen wären.

## Patentansprüche

1. Schwerlastkupplung für eine Presse zwischen einer in Längsrichtung vorbeweglichen Kolbenstange (2) oder sonstigen Schubantriebsverbindung und einem der Kolbenstange (2) endseitig vorgelagerten Preßstempel (1), der einen Kopf (11) der Kolbenstange in einem Kolbenstangenfuß (10) umfaßt, so daß der Kopf (11) mit einer Stirnseite (26) zur direkten Kraftübertragung beim Preßstempel-Vorschub in den Kolbenstangenfuß (10) drückt, wobei die Verbindung über lösbare Verbindungselemente erfolgt, **dadurch gekennzeichnet, daß** die lösbaren Verbindungselemente zumindest einen quer zur Längsrichtung ausgerichteten, den Kolbenstangenfuß (10) durchsetzenden und den Kolbenstangenkopf (11) hintergreifenden Keil (13) aufweisen, der bei der Rückzugsbewegung der Kolbenstange (2) den Preßkolben (1) mitnimmt.

2. Kupplung nach Anspruch 1, **dadurch gekennzeichnet, daß** der bzw. jeder Keil (13) eine vorwiegend nach unten gerichtete Stellung hat.

3. Kupplung nach Anspruch 1 oder 2, **dadurch gekennzeichnet, daß** zwei Keile (13) beidseitig zu der Kolbenstange (2) eingesetzt sind.

4. Kupplung nach einem der Ansprüche 1 bis 3, **dadurch gekennzeichnet, daß** der bzw. jeder der Keile (13) am Kolbenstangenfuß (10) geführt und zur Kolbenstange (2) hin über zumindest ein lösbares Druckstück (21,22) abgestützt ist.

5. Kupplung nach Anspruch 4, **dadurch gekennzeichnet, daß** zwei einander bezüglich der Kolbenstange gegenüberliegende Druckstücke (21,22) vorgesehen sind, die bei eingesetztem Keil (13) im Kolbenstangenfuß (10) festliegen.

6. Kupplung nach Anspruch 5, **dadurch gekennzeichnet, daß** die Druckstücke (21,22) sich gegen Hinterschneidungen oder Schultern (24) am Kopf (11) der Kolbenstange (2) abstützen und nach Lösen des bzw. jedes Keils (13) von der Abstützung frei zu bewegen sind.

7. Kupplung nach Anspruch 6, **dadurch gekennzeichnet, daß** die Druckstücke (21,22) halbringförmig ausgebildet sind und sich im wesentlichen zu einer Ringform ergänzen, die innerhalb des Kolbenstangenfußes (10) nach Lösen des Keils (13) verdrehbar ist.

8. Kupplung nach einem der Ansprüche 1 bis 7, **dadurch gekennzeichnet, daß** der Kopf (11) der Kolbenstange (2) in Längsrichtung in eine Ausnehmung (25) des Kolbenstangenfußes eingreift.

## Claims

1. Heavy-duty coupling for a press, between a piston rod (2) able to be advanced in the longitudinal direction, or some other connection of this kind to a thrust-applying drive, and a press ram (1) which is mounted in front of the end of the piston rod (2) and which encloses a head (11) of the piston rod in a piston-rod end-block (10), so that a head (11) of the piston rod presses into the piston-rod end-block (10) by an end-face (26) to transmit force directly as the press ram advances, the connection being made by means of detachable connecting elements, **characterised in that** the detachable connecting elements comprise at least one wedge (13) which is aligned transversely to the longitudinal direction, which passes through the piston-rod end-block (10), which fits behind the head (11) of the piston rod and which entrains the press ram (1) when the piston rod (2) makes its withdrawing movement.

2. Coupling according to claim 1, **characterised in that** the or each wedge (13) occupies a predominantly downwardly directed position.

3. Coupling according to claim 1 or 2, **characterised in that** two wedges (13) are inserted on the two sides of the piston rod (2).

4. Coupling according to one of claims 1 to 3, **characterised in that** the or each wedge (13) is guided on the piston-rod end-block (10) and is supported in the direction of the piston rod (2) by at least one detachable thrust-piece (21, 22).

5. Coupling according to claim 4, **characterised in that** two thrust-pieces (21, 22) are provided which are situated in opposite positions relative to the piston rod and which are anchored in the piston-rod end-block (10) when a wedge (13) is inserted.

6. Coupling according to claim 5, **characterised in that** the thrust-pieces (21,22) are supported against undercuts in or shoulders (24) on the head (11) of the piston rod (2) and can be moved free of this support once the or each wedge (13) has been detached.

7. Coupling according to claim 6, **characterised in that** the thrust-pieces are of a semi-annular shape, and substantially complement one another to form an annular shape which is rotatable within the piston-rod end-block (10) once the wedge (13) has been detached.

8. Coupling according to one of claims 1 to 7, **characterised in that** the head (11) of the piston rod (2) engages in the longitudinal direction in a recess (25) in the piston-rod end-block.

## Revendications

1. Accouplement pour charges lourdes pour une presse entre une tige de piston avant (2) mobile en direction longitudinale ou une autre liaison motrice de poussée et un poinçon de presse (1) côté extrémité avant la tige de piston (2), qui entoure une tête (11) de la tige de piston dans un pied de tige de piston (10), de telle manière que la tête (11) pousse avec une face frontale (26) dans le pied de tige de piston (10) pour la transmission directe de force lors de l'avance du poinçon de presse, **caractérisé en ce que** les éléments de liaison amovibles comprennent au moins un coin (13) orienté transversalement à la direction longitudinale, traversant le pied de tige de piston (10) et s'accrochant derrière la tête de la tige de piston (11), qui entraîne le poinçon de presse (1) lors du mouvement de retrait de la tige de piston (2).

2. Accouplement selon la revendication 1, **caractérisé en ce que** le ou chaque coin (13) occupe une position orientée principalement vers le bas.

3. Accouplement selon la revendication 1 ou 2, **caractérisé en ce que** deux coins (13) sont introduits de part et d'autre de la tige de piston (2).

4. Accouplement selon l'une quelconque des revendications 1 à 3, **caractérisé en ce que** le ou chaque coin (13) est guidé sur le pied de tige de piston (10) et est appuyé par au moins une pièce de pression amovible (21, 22) en direction de la tige de piston (2).

5. Accouplement selon la revendication 4, **caractérisé en ce qu'**il est prévu deux pièces de pression (21, 22) opposées par rapport à la tige de piston, qui sont calées dans le pied de tige de piston (10) lorsque le coin (13) est introduit.

6. Accouplement selon la revendication 5, **caractérisé en ce que** les pièces de pression (21, 22) s'appuient contre des contre-dépouilles ou des épaulements (24) sur la tête (11) de la tige de piston (2) et peuvent être déplacées librement de leur appui lorsque le ou chaque coin (13) est retiré.

7. Accouplement selon la revendication 6, **caractérisé en ce que** les pièces de pression (21, 22) sont de forme semi-annulaire et se complètent essentiellement sous la forme d'un anneau qui peut tourner à l'intérieur du pied de tige de piston (10) après l'enlèvement du coin (13).

8. Accouplement selon l'une quelconque des revendications 1 à 7, **caractérisé en ce que** la tête (11) de la tige de piston (2) s'engage en direction longitudinale dans un évidement (25) du pied de tige de piston.
